# EUROPEAN PATENT SPECIFICATION

(11) **EP 1 546 687 B1**
(45) Date of publication and mention of the grant of the patent: **24.01.2007**
(21) Application number: 03771128.0
(22) Date of filing: 30.07.2003
(51) Int. Cl.: G01N 21/64, G01T 1/20

(54) **MULTIFUNCTION MEASURING INSTRUMENT**
MULTIFUNKTIONS-MESSINSTRUMENT
INSTRUMENT DE MESURE A FONCTIONS MULTIPLES

(30) Priority: 30.07.2002 FI 20021423
(43) Date of publication of application: 29.06.2005
(73) Proprietor: Hidex Oy, 20750 Turku (FI)
(72) Inventor: AALTO, Juhani, FIN-20900 Turku (FI); HAASLAHTI, Jukka, FIN-20810 Turku (FI)
(74) Representative: Pirhonen, Kari Lennart
(86) International application number: PCT/FI2003/000585
(87) International publication number: WO 2004/011916

(56) References cited:
- US-A- 3 855 473
- US-A- 5 416 329
- US-B1- 6 191 852

## Description

### OBJECT OF THE INVENTION

The invention relates to a multifunction instrument for measuring biochemical and medical samples, which are preferably placed into the wells of the sample plates and measured by a detector, the instrument having means for moving the detector into two different positions for using at least two different light paths for measuring the samples.

### PRIOR ART

The known measuring devices are usually intended for one measuring process, as for example radioactive labels, luminescence, several types of fluorescence or absorption. Also multifunction measuring instruments have been made, typically involving either non-radioactive methods or radioactivity counting and luminescence. Instruments measuring both radioactive labels and fluorescence are not known to exist. The aim of the present invention is to solve the problems and provide a new multifunction instrument capable to measure all commonly used techniques

The document US-6,191,852 presents an optical measuring system for detecting luminescence or fluorescence signals. In the device there is a glass-fiber taper element and an image sensor situated opposite the small end surface of the image sensor. The combination of the glass-fiber taper element and the image sensor is fitted on a fixed frame allowing it to pivot through 180° about a rotary spindle. In the first position a first microtitre plate is measured from the top and in the second position a second microtitre plate is measured from the bottom through the transparent bottom of the microtitre plate. The arrangement is not suitable for measuring radioactive labels by liquid scintillation counting because the decreasing cross-sectional area of the glass-fiber taper element will result a significant loss of light photons. The signal level is therefore highly reduced and under the minimum for liquid scintillation counting.

The document US-4,132,653 presents a polarization analyzer for vacuum ultraviolet and x-ray radiation. In the device the detector is pivotable 90° between two positions. In a first position the detector is placed in front of the mirror to detect the radiation R, incident on mirror, and in a second position detector is rotated 90° to detect the radiation Rᵣ reflected by mirror. The arrangement is suitable for the polarization analyzer because the strong beam of radiation is emerged for example from a monochromator or from a syncrothron. However, the arrangement is not suitable for measuring radioactive labels by liquid scintillation counting because the detector could not detect weak light photons emitted from a radioactive sample.

The aim of the present invention is to solve the above problems and provide a new multifunction instrument.

### SUMMARY OF THE INVENTION

The invention is defined in claim 1. Preferred embodiments of the invention are defined in the dependent claims.

The present invention may be briefly described and summarised that the multifunction instrument is provided with a device for moving the detector into the following two different positions for two different light paths:
- in the first position for measuring radioactive labels by liquid scintillation counting the detector is placed close to the sample or sample well for receiving signals via the first light path without any light conducting components between the detector and the sample,
- and in the second position for non-radioactive measuring, such as fluorescence measuring the detector is arranged to receive emitted light from the sample via the second light path, where is at least one optical component, such as a lens, mirror or a glass fiber between the detector and the sample.

### PREFERRED EMBODIMENTS

According to a preferred embodiment of the invention the multifunction instrument is provided with a rotating device for rotating the detector in two different positions for the said two different light paths.

According to a second preferred embodiment of the invention in the first position the detector the first light path is provided for liquid scintillation counting and/or luminescence counting, and that the second light path is provided for fluorescence measuring.

According to a third preferred embodiment of the invention the multifunction instrument has a light source provided for excitation light With the second light path for fluorescence measuring.

According to a fourth preferred embodiment of the invention the multifunction instrument is provided with an absorbance detector to be used with the said light source.

According to a fifth preferred embodiment of the invention the detector is provided with slide and guide elements, the rotating device is provided to turn the detector into vertical position for liquid scintillation measuring and/or luminescence counting above the sample plate, and that the rotating device is provided to turn the detector into horizontal position for fluorescence measuring via the second light path.

The multifunction instrument according to the invention can measure radioactive labels by using liquid scintillation counting and/or luminescence counting process and also non-radioactive labels by using fluorescence process. For both of these measurements can be used the same rotating detector, a photo multiplier tube above the sample.

The second photo multiplier tube under the sample, primarily used in liquid scintillation counting for better efficiency, can also be used for absorbance measuring. However, the absorbance measurements can also be carried out with a separate absorbance detector, if there is no photo multiplier tube under the sample.

In that case the same light source can be used in the excitation of fluorescence measurement and in the absorbance measurement.

In liquid scintillation counting the radioactive labels such as tritium H³, radiocarbon C¹⁴, phosphor P³², iodine I¹²⁵ and other beta emitting isotopes can be measured.

In fluorescence measurements the excitation light and the emission light have different wavelengths. The excitation light pulse of about 1µs is partly in UV area having wavelength of 240-500 nm. The light emitted from the sample label is visible light having wavelength of 400-650 nm. The prompt, time-resolved and polarization processes can be used.

According to a further embodiment of the invention
- the detector is provided with slide and guide elements for turning the detector into the said two positions,
- the rotating device is provided to turn the detector into the first position or the vertical position for liquid scintillation measuring and/or luminescence counting above the sample plate,
- and the rotating device is provided to turn the detector into the second position or the horizontal position for fluorescence measuring via the second light path.

According to a further embodiment of the invention the vertical first position of the detector the detector is used for liquid scintillation counting and placed above the sample well without any intermediate components.

According to a further embodiment of the invention in the vertical first position a cover plate provided with an aperture is placed between the detector and the sample well for guiding the light from the sample through the aperture to the detector.

According to a further embodiment of the invention
- the cover plate is a slide element provided with at least two apertures of different size diameter,
- and the slide element can be moved in horizontal direction for placing any of the apertures above the sample well to be measured.

Due to the different size measuring apertures in the slide element the different size of sample wells can be measured. For most common diameter of wells, 24 and 96 wells, to be measured there is an appropriate aperture in the cover plate.

According to a further embodiment of the invention at least one aperture in the slide element is funnel shaped so that the aperture end of smaller diameter facing the sample well substantially fits the size of the diameter of the sample well. The opposite aperture end of larger diameter is facing the detector. The arrangement ensures that the detector detects all light photons emitted from the radioactive sample.

### BRIEF DESCRIPTION OF THE DRAWINGS

An embodiment of the invention is described in the following by means of an example with reference to the appended drawings. However, the present invention should not be construed to be limited thereto. In the drawings
- Figure 1: shows a cross-sectional view of a multifunction instrument.
- Figure 2: corresponds to Fig. 1 and shows the multifunction instrument in a second measuring position.
- Figure 3: shows another cross-sectional view of a multifunction instrument.

### DETAILED DESCRIPTION OF THE PREFERRED EMBODIMENT RELATIVE TO THE DRAWINGS

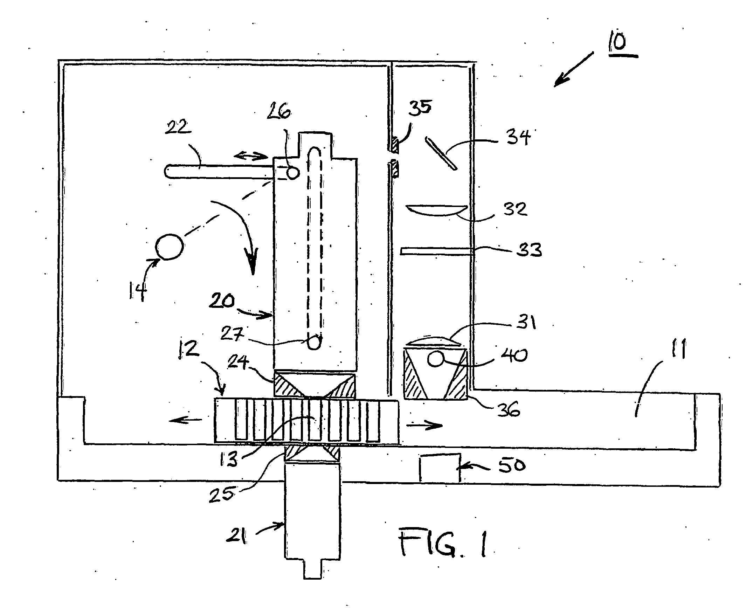

In Figure 1 there is a multifunction instrument 10, which has a transfer unit 11 for moving sample plates 12. The sample to be measured is placed into a well 13 of the sample plate 12. In the multifunction instrument 10 of Figure 1, which is an embodiment of the invention, there are two measuring detectors. The first measuring detector 20, which is a photo multiplier tube, is located above the sample well 13. It can be used e.g. as a liquid scintillation counter for measuring low energy radiation emitting samples and/or luminescence counting. For double detector measuring process in the multifunction instrument 10 there is optionally the second measuring detector 21, which is also a photo multiplier tube and locating under the sample well 13.

For measuring different kind of sample plates 12 there are cover plates 24 and 25 between the sample plate 12 and the detectors 20 and 21. The cover plates 24 and 25 are slides, which have measuring apertures of different size diameters. By moving the cover plates 24 and 25 in horizontal direction the measuring apertures for the detectors 20 and 21 can be changed. So e.g. the sample plates for 24 or 96 sample wells can be measured.

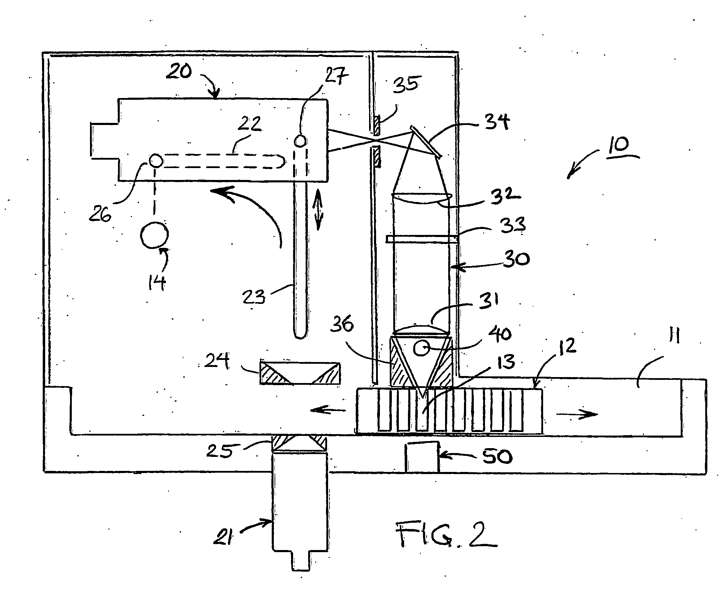

In the multifunction instrument 10 of Figure 1 the first photo multiplier tube 20 is presented in its first position for liquid scintillation counting and/or luminescence counting of the sample plate 12. For turning the photo multiplier tube 20 into the second position the tube 20 is provided with a slide pin 26 moving in a guide track 22. Then a rotating device 14 turns the detector anticlockwise the second measuring position described in Figure 2.

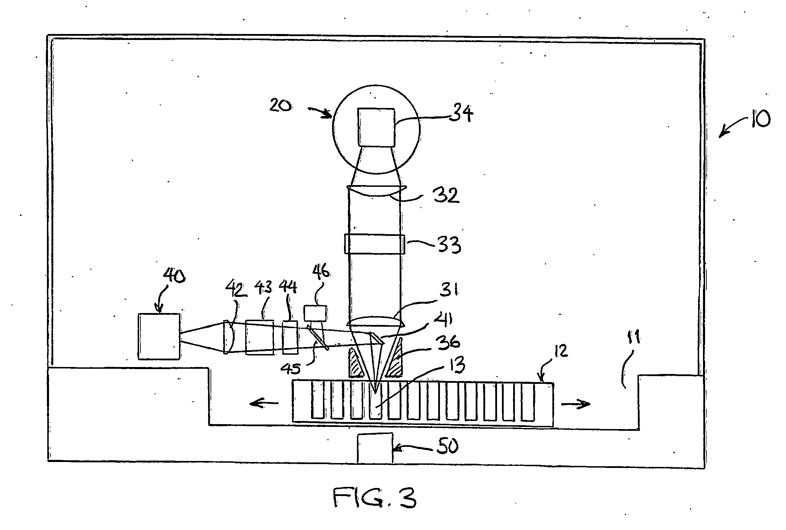

In Figure 2 the multifunction instrument 10 is presented in the second measuring position. In that position the first photo multiplier tube 20, locating above the sample well 13, has been rotated counterclockwise by a rotating device 14. In this position the same photo multiplier tube 20 can be used as a detector for fluorescence measuring. For this measurement the sample plate 12 and the sample well 13 to be measured has been moved to another location adjacent to the light path system 30. The excitation light is brought to the sample well 13 by the excitation light system 40, which is more detailed described in Fig. 3. In the fluorescence measuring of Fig. 2 the emitted light from the sample well 13 of the sample plate 12 is directed through the lenses 31, 32 and filter 33 to the mirror 34, where the light is reflected to the detector photo multiplier tube 20.

Figure 3 shows the multifunction instrument 10 of Figure 2 seen from another side. The measuring process is the fluorescence measuring as described in Fig. 2. The excitation light is brought from the excitation light source 40 through a lens 42 and filters 43 and 44 via a mirror 41 to the sample well 13 of the sample plate 12. The emitted light from the sample well 13 is directed through the lenses 31, 32 and filter 33 to the mirror 34 and reflected to the photo multiplier tube 20, as already described in Fig. 2. The excitation light mirror 41 is essentially smaller than the lens 31 in the emission light path. The ratio of the areas of the mirror 41 and lens 31 is about 1:40. In the excitation light path there is also a second mirror 45 for bringing light to a reference detector 46.

In the multifunction instrument 10 of Figure 3 there is also a cover plate 36 slide, which has apertures of different size diameters. By moving the cover plate 36 in horizontal direction an appropriate measuring aperture can be selected. So e.g. the sample plates for 96 sample wells or more can be measured.

The multifunction instrument 10 of Figure 3 is also provided with an absorbance detector 50 below the sample plate 12, which can be used with the said light source 40. Also on the opposite side of the excitation light source 40 there is space for some other optional measuring detector.

It is obvious to a person skilled in the art that the different embodiments of the invention may vary within the scope of the claims presented below.

### REFERENCE NUMERALS

- 10: multifunction instrument
- 11: transfer unit
- 12: sample plate
- 13: well
- 14: rotating device
- 20: photo multiplier tube
- 21: photo multiplier tube
- 22: guide track
- 23: guide track
- 24: cover plate
- 25: cover plate
- 26: slide pin
- 27: slide pin
- 30: light path system
- 31: lens
- 32: lens
- 33: filter
- 34: mirror
- 35: aperture plate
- 36: cover plate
- 40: excitation light source
- 41: mirror
- 42: lens
- 43: filter
- 44: filter
- 45: mirror
- 46: reference detector
- 50: absorbance detector

## Claims

1. A multifunction instrument (10) for measuring biochemical and medical samples, which are preferably placed in wells (13) of sample plates (12), the instrument comprising a light detector (20), at least two different light paths (24, 30), and a device (14) for moving the detector into two different positions for using said at least two different light paths (24, 30) for measuring the samples using two different measurement methods, **characterized in that** said device (14) is adapted to move the detector (20) into the following two different positions:
- in the first position the detector (20) is placed close to the sample or sample well (13) for receiving signals via the first light path (24) without any light conducting components between the detector and the sample and the instrument is adapted to measure radioactive labels by liquid scintillation counting,
- and in the second position the detector (20) is arranged to receive emitted light from the sample via the second light path (30), where there is at least one optical component, such as a lens, a mirror or a glass fiber, between the detector and the sample and the instrument is adapted to perform non-radioactive measurements, such as fluorescence measurements.

2. A multifunction instrument (10) as claimed in claim 1, **characterized in that** the multifunction instrument (10) is provided with a rotating device (14) for rotating the detector (20) in the two different positions for the said two different light paths (24, 30).

3. A multifunction instrument (10) as claimed in claim 1 or 2, **characterized in that** in the first position of the detector (20) the first light path (24) is provided for liquid scintillation counting and/or luminescence counting,

4. A multifunction instrument (10) as claimed in claim 1, 2 or 3, **characterized in that** the multifunction instrument comprises a light source (40) for providing excitation light and **in that** in the second position of the detector (20) the second light path (30) is provided for fluorescence measuring.

5. A multifunction instrument (10) as claimed in claim 4, **characterized in that** the multifunction instrument (10) is provided with an absorbance detector (50) to be used with the said light source (40).

6. A multifunction instrument (10) as claimed in any of claims 2-5, **characterized in that**
- the detector (20) is provided with slide (26, 27) and guide (22, 23) elements for turning the detector into the said two positions,
- the rotating device (14) is adapted to turn the detector (20) into a vertical first position for liquid scintillation measuring and/or luminescence counting above the sample plate (12),
- and the rotating device (14) is adapted to turn the detector (20) into a horizontal second position for fluorescence measuring via the second light path.

7. A multifunction instrument (10) as claimed in claim 6, **characterized in that** in the vertical first position of the detector (20) the detector is used for liquid scintillation counting and placed above the sample well (13) without any intermediate components.

8. A multifunction instrument (10) as claimed in claim 6, **characterized in that** in the vertical first position a cover plate (24) provided with an aperture is placed between the detector (20) and the sample well (13) for guiding the light from the sample through the aperture to the detector.

9. A multifunction instrument (10) as claimed in claim 8, **characterized in that**
- the cover plate (24) is a slide element provided with at least two apertures of different size diameter,
- and the slide element (24) is adapted to be moved in horizontal direction for placing any of the apertures above the sample well (13) to be measured.

10. A multifunction instrument (10) as claimed in claims 8 or 9, **characterized in that** at least one aperture in the slide (24) element is funnel shaped so that the aperture end of smaller diameter facing the sample well (13) substantially fits the size of the diameter of the sample well.

## Patentansprüche

1. Multifunktionsinstrument (10) zur Messung von biochemischen und medizinischen Proben, die vorzugsweise in Vertiefungen (13) von Probenplatten (12) gegeben werden, wobei das Instrument einen Lichtdetektor (20), mindestens zwei Lichtwege (24, 30) und eine Vorrichtung (14) zum Bewegen des Detektors in zwei verschiedene Positionen umfasst, um die besagten mindestens zwei Lichtwege (24, 30) zur Messung von Proben unter Verwendung zweier verschiedener Messverfahren zu verwenden, **dadurch gekennzeichnet, dass** besagte Vorrichtung (14) dazu verwendet wird, den Lichtdetektor (20) in folgende zwei verschiedene Positionen zu bewegen:
- in der ersten Position wird der Lichtdetektor (20) in die Nähe der Probe oder Vertiefung (13) plaziert, wo dieser, ohne lichtführende Komponenten zwischen Lichtdetektor und Proben, Signale vom ersten Lichtweg (24) empfängt und das Instrument dazu verwendet wird, radioaktive Labels mit Hilfe von Flüssigszintillationszählung zu messen
- und in der zweiten Position wird der Lichtdetektor (20) so angeordnet, dass er von der Probe emittiertes Licht über den zweiten Lichtweg (30) empfängt, der zwischen Lichtdetektor und Proben über mindestens eine optische Komponente wie zum Beispiel eine Linse, einen Spiegel oder eine Glasfaser verfügt und das Instrument dazu verwendet wird, nichtradioaktive Messungen wie zum Beispiel Fluoreszenzmessungen durchzuführen.

2. Ein Multifunktionsinstrument (10) nach Anspruch 1, **dadurch gekennzeichnet, dass** das Multifunktionsinstrument (10) zum Drehen des Lichtdetektors (20) in die zwei verschiedenen Positionen für die besagten zwei verschiedenen Lichtwege (24, 30) mit einer rotierenden Vorrichtung (14) ausgestattet ist.

3. Multifunktionsinstrument (10) nach Anspruch 1 oder 2, **dadurch gekennzeichnet, dass** der erste Lichtweg (24) in der ersten Position des Lichtdetektors (20) für eine Flüssigszintillationszählung und/oder Lumineszenzmessung vorgesehen ist.

4. Multifunktionsinstrument (10) nach Anspruch 1, 2 oder 3, **dadurch gekennzeichnet, dass** das Multifunktionsinstrument eine Lichtquelle (40) zur Erzeugung von Erregerlicht umfasst und dass in der zweiten Position des Lichtdetektors (20) der zweite Lichtweg (30) für Fluoreszenzmessungen vorgesehen ist.

5. Multifunktionsinstrument (10) nach Anspruch 4, **dadurch gekennzeichnet, dass** das Multifunktionsinstrument (10) mit einem mit besagter Lichtquelle (40) zu verwendenden Absorbanzdetektor (50) ausgestattet ist.

6. Multifunktionsinstrument (10) nach einem der Ansprüche 2-5, **dadurch gekennzeichnet, dass**
- der Lichtdetektor (20) zum Drehen des Lichtdetektors in die besagten zwei Positionen mit Gleitelementen (26, 27) und Führungselementen (22, 23) ausgestattet ist
- die rotierende Vorrichtung (14) dazu verwendet wird, den Lichtdetektor (20) für die Flüssigszintillationszählung und/oder Lumineszenzmessung in die vertikale erste Position über der Probenplatte (12) zu drehen,
- und die rotierende Vorrichtung (14) dazu verwendet wird, den Lichtdetektor (20) für die Fluoreszenzmessung über den zweiten Lichtweg in eine horizontale zweite Position zu drehen.

7. Multifunktionsinstrument (10) nach Anspruch 6, **dadurch gekennzeichnet, dass** in der vertikalen ersten Position des Lichtdetektors (20) dieser zur Flüssigszintillationszählung verwendet und ohne Zwischenkomponenten über der Probenvertiefung (13) positioniert wird.

8. Multifunktionsinstrument (10) nach Anspruch 6, **dadurch gekennzeichnet, dass** sich in der vertikalen ersten Position zwischen dem Lichtdetektor (20) und der Probenvertiefung (13) eine Abdeckplatte (24) mit einer Öffnung befindet, durch die das Licht von der Probe durch die Öffnung zum Lichtdetektor gelangt.

9. Multifunktionsinstrument (10) nach Anspruch 8, **dadurch gekennzeichnet, dass**
- die Abdeckplatte (24) aus einem Gleitelement mit mindestens zwei Öffnungen unterschiedlicher Durchmesser besteht,
- und das Gleitelement in horizontaler Richtung bewegt werden kann, um eine der Öffnungen über der zu messenden Probenvertiefung (13) zu positionieren.

10. Multifunktionsinstrument (10) nach Anspruch 8 oder 9, **dadurch gekennzeichnet, dass** mindestens eine Öffnung des Gleitelements (24) so trichterförmig ausgeführt ist, dass der zur Probenvertiefung (13) zeigende kleinere Öffnungsdurchmesser im Wesentlichen dem Durchmesser der Probenvertiefung entspricht.

## Revendications

1. Instrument multifonctions (10) pour mesurer des échantillons biochimiques et médicaux qui sont, de préférence, placés dans des puits (13) de plaques d'échantillons (12), l'instrument comprenant un détecteur de lumière (20), au moins deux différentes trajectoires de lumière (24, 30) et un dispositif (14) pour déplacer le détecteur dans deux différentes positions afin d'utiliser lesdites au moins deux différentes trajectoires de lumière (24, 30) pour mesurer les échantillons en utilisant deux différentes méthodes de mesure, **caractérisé en ce que** ledit dispositif (14) est adapté à déplacer le détecteur (20) dans l'une des deux positions différentes suivantes:
- dans la première position, le détecteur (20) est placé près de l'échantillon ou du puits d'échantillon (13) pour recevoir les signaux via la première trajectoire de lumière (24) sans aucun composant conducteur de lumière entre le détecteur et l'échantillon et que l'instrument est adapté à mesurer des traceurs radioactifs par le comptage de scintillation liquide
- et dans la deuxième position, le détecteur (20) est arrangé pour recevoir la lumière émise par l'échantillon via la seconde trajectoire de lumière (30), en la présence d'au moins un composant optique, tel une lentille, un miroir ou une fibre de verre, entre le détecteur et l'échantillon et que l'instrument est adapté à effectuer des mesures non radioactives, telles les mesures par fluorescence.

2. Instrument multifonctions (10) selon la revendication 1, **caractérisé en ce que** l'instrument multifonctions (10) est muni d'un dispositif rotatif (14) pour tourner le détecteur (20) dans les deux différentes positions pour lesdites deux différentes trajectoires de lumière (24, 30).

3. Instrument multifonctions (10) selon la revendication 1 ou 2, **caractérisé en ce que** dans la première position du détecteur (20), la première trajectoire de lumière (24) est prévue pour le comptage par scintillation liquide et/ou comptage par luminescence.

4. Instrument multifonctions (10) selon la revendication 1, 2 ou 3, **caractérisé en ce que** l'instrument multifonctions comprend une source de lumière (40) pour fournir de la lumière d'excitation et que dans la seconde position du détecteur (20), la seconde trajectoire de lumière (30) est prévue pour la mesure par fluorescence.

5. Instrument multifonctions (10) selon la revendication 5, **caractérisé en ce que** l'instrument multifonctions (10) est muni d'un détecteur d'absorbance (50) pour être utilisé avec ladite source de lumière (40).

6. Instrument multifonctions (10) selon l'une quelconque des revendications 2 à 5, **caractérisé en ce que**
- le détecteur (20) est muni d'éléments coulissants (26, 27) et de guide (22, 23) pour tourner le détecteur dans lesdites deux positions
- le dispositif rotatif (14) est adapté à tourner le détecteur (20) dans une première position verticale pour la mesure par scintillation liquide et/ou le comptage par luminescence au-dessus de la plaque d'échantillon (12)
- et le dispositif rotatif (14) est adapté à tourner le détecteur (20) dans une seconde position horizontale pour la mesure par fluorescence via la seconde trajectoire de lumière.

7. Instrument multifonctions (10) selon la revendication 6, **caractérisé en ce que** dans la première position verticale du détecteur (20), le détecteur est utilisé pour la mesure par scintillation liquide et placé au-dessus du puits d'échantillon (13) sans aucun composant intermédiaire.

8. Instrument multifonctions (10) selon la revendication 6, **caractérisé en ce que** dans la première position verticale, une plaque de couvercle (24) munie d'une ouverture est placée entre le détecteur (20) et le puits d'échantillon (13) pour guider la lumière de l'échantillon à travers l'ouverture vers le détecteur.

9. Instrument multifonctions (10) selon la revendication 8, **caractérisé en ce que**
- la plaque de couvercle (24) est un élément coulissant muni d'au moins deux ouvertures de diamètres de tailles différentes,
- et que l'élément coulissant (24) est adapté à être déplacé dans une direction horizontale pour placer l'une quelconque des ouvertures au-dessus du puits d'échantillon (13) à mesurer.

10. Instrument multifonctions (10) selon la revendication 8 ou 9, **caractérisé en ce qu'**au moins une ouverture dans l'élément coulissant (24) a la forme conique, de façon à ce que l'extrémité munie de l'ouverture, ayant un plus petit diamètre et se trouvant en face du puits d'échantillon (13), corresponde essentiellement à la taille du diamètre du puits d'échantillon.
